# EUROPÄISCHE PATENTSCHRIFT

(11) **EP 2 633 603 B1**
(45) Veröffentlichungstag und Bekanntmachung des Hinweises auf die Patenterteilung: **22.08.2018**
(21) Anmeldenummer: 11764102.7
(22) Anmeldetag: 19.09.2011
(51) Int. Cl.: H02K 7/102

(54) **ELEKTROMOTOR**
ELECTRIC MOTOR
MOTEUR ÉLECTRIQUE

(30) Priorität: 29.10.2010 DE 102010049748
(43) Veröffentlichungstag der Anmeldung: 04.09.2013
(73) Patentinhaber: Sew-Eurodrive GmbH & Co. KG, 76646 Bruchsal (DE)
(72) Erfinder: LUTZ, Andreas, 76287 Rheinstetten (DE); FLÖRCHINGER, Gerhard, 67376 Harthausen (DE)
(74) Vertreter: Tüngler, Eberhard
(86) Internationale Anmeldenummer: PCT/EP2011/004678
(87) Internationale Veröffentlichungsnummer: WO 2012/055462

(56) Entgegenhaltungen:
- WO-A1-2004/057732
- KR-B1- 100 751 035
- US-B2- 7 528 512
- US-B2- 7 538 462

## Beschreibung

Die Erfindung betrifft einen Elektromotor.

Es ist allgemein bekannt, Motoren mit einer Bremse zu verbinden.

**Aus der** US 7 528 512 B2 **ist als nächstliegender Stand der Technik ein** Bremsmotor **mit zwei Bremsen bekannt.**

**Aus der** US 7 538 462 B2 **ist ein Antrieb mit einer integrierten Bremse bekannt.**

**Aus der** WO 2004/057732 A1 **ist ein Adapter für einen Bremsmotor mit einem Hebel zum Lüften der Bremse bekannt.**

**Aus der** KR 100 751 035 B1 **ist ebenfalls ein Antrieb mit einer Doppelbremse bekannt.**

Der Erfindung liegt daher die Aufgabe zugrunde, einen Elektromotor weiterzubilden, insbesondere sicher zu gestalten.

Erfindungsgemäß wird die Aufgabe bei dem Elektromotor nach den in Anspruch 1 angegebenen Merkmalen gelöst. Weitere Ausgestaltungen der Erfindung sind in den abhängigen Ansprüchen 2 - 11 definiert. Von Vorteil ist dabei, dass zwei Bremsen Drehmoment, also Bremsmoment, an die Rotorwelle führen können. Somit ist die Sicherheit erhöhbar. Insbesondere sind die Bremsen nach verschiedenen Wirkprinzipien ausführbar. Auf diese Weise ist durch die unterschiedlichen Wirkprinzipien eine noch weiter erhöhte Sicherheit erreichbar. Auch bei Ausführung als elektromagnetisch betätigbare Federdruckbremse sind unterschiedliche Wirkweisen realisierbar, wie Gleichstrombremse oder Wechselstrombremse.

Bei einer vorteilhaften Ausgestaltung ist die erste Bremse in einem Gehäuseteil, insbesondere Lagerschild, aufgenommen, insbesondere in einer im Wesentlichen topfförmigen Vertiefung aufgenommen ist und schraubverbunden ist. Von Vorteil ist dabei, dass die erste Bremse vorkomplettiert ausbildbar ist und in einem für die Bremse gehäusebildenden und somit die Wärme der Bremse abführenden Gehäuseteil aufnehmbar ist. Außerdem hat das Gehäuseteil dann auch Magnetfeld-abschirmende Funktion.

Bei einer vorteilhaften Ausgestaltung ist die erste Bremse in einem Gehäuseteil, insbesondere Lagerschild, aufgenommen, welches als Spulenkern der Spulenwicklung des Elektromagneten der Bremse fungiert. Von Vorteil ist dabei, dass das Gehäuseteil mehrere Funktionen ausführt und somit die Anzahl der notwendigen Teile für das Herstellen des Motors mit Bremsen gering ist.

Bei einer vorteilhaften Ausgestaltung nimmt das Gehäuseteil ein Lager der Rotorwelle des Motors auf. Von Vorteil ist dabei, dass Kräfte vom Lager ans Gehäuseteil ableitbar sind und ebenso die Wärme des Lagers über das Gehäuseteil an die Umgebung ableitbar ist. Außerdem ist die Wärme der Bremsspule ableitbar an die Umgebung und das Magnetfeld geführt im Spulenkern. Insbesondere sitzen Lager und Spulenwicklung der Bremse im gleichen axialen Bereich oder die entsprechend überdeckten axialen Bereiche überschneiden sich.

Bei einer vorteilhaften Ausgestaltung ist das Gehäuseteil in einer im Wesentlichen topfförmigen Vertiefung aufgenommen und schraubverbunden. Von Vorteil ist dabei, dass das Gehäuseteil eine einfach herzustellende Formgebung aufweist.

**Erfindungsgemäß** sind beide Bremsen als elektromagnetisch betätigbare Federdruckbremse ausgeführt, wobei am Spulenkörper des Elektromagneten Federelemente abgestützt sind, die bei Nichtbestromung des Elektromagneten eine Ankerscheibe auf einen Belagträger drücken, der somit auf eine Reibscheibe gedrückt wird, wobei die Ankerscheibe drehfest zur Reibscheibe und zum Elektromagneten angeordnet ist und axial verschiebbar angeordnet ist, wobei der Belagträger mit der Rotorwelle des Elektromotors drehfest und axial verschiebbar verbunden ist. Von Vorteil ist dabei, dass bei Nichtbestromung die Bremse einfällt und somit bei Stromausfall Bremskraft erzeugt wird, wodurch die Sicherheit erhöht ist.

**Erfindungsgemäß** sind die erste und die zweite Bremse vorkomplettiert ausgebildet, indem eine Reibscheibe mittels eines Führungsteils axial beabstandet zu einem Spulenkern der Bremse und festgelegt ist, wobei das Führungsteil zur axialen Führung einer Ankerscheibe der Bremse vorgesehen ist, wobei die Ankerscheibe in Umfangsrichtung formschlüssig begrenzt und gehalten ist vom Führungsteil. Von Vorteil ist dabei, dass die vorkomplettierte Bremse in ihrer Funktion schon vor dem Zusammenfügen des Motors überprüfbar ist als Einheit. Außerdem ist sie als lagerfähige Einheit ausgeführt und somit für logistische Zwecke einfach benutzbar. Das Führungsteil weist einen ersten axialen Abschnitt auf zur Führung der Ankerscheibe und einen zweiten axialen Abschnitt auf, der ein Außengewinde zum Einschrauben in eine Gewindebohrung des Spulenkerns aufweist. Von Vorteil ist dabei, dass mittels des Führungsteils eine vorkomplettierte Ausführung ermöglicht ist und das Führungsteil zum Zusammenhalten der Teile der Bremse verwendbar ist. Bei einer vorteilhaften Ausgestaltung ist an einem axialen Endbereich des Führungsteils ein innensechskant vorgesehen, insbesondere so dass das Führungsteil mittels eines Sechskant-Werkzeugs in eine Gewindebohrung des Spulenkerns einschraubbar ist. Von Vorteil ist dabei, dass eine einfache Herstellung ermöglicht ist.

Bei einer vorteilhaften Ausgestaltung nimmt der Spulenkern der ersten Bremse ein Lager der Rotorwelle auf. Von Vorteil ist dabei, dass mehrere Funktionen realisiert sind mit einem einzigen Gehäuseteil.

Bei einer vorteilhaften Ausgestaltung weist das Führungsteil eine Ausnehmung mit Innengewinde auf, so dass eine Reibscheibe der Bremse mittels einer Schraube an das Führungsteil schraubverbindbar ist, insbesondere gegen einen Absatz am Außenumfang des Führungsteils festlegbar ist. Von Vorteil ist dabei, dass ein Zusammenhalten der Reibscheibe und des Spulenkerns ermöglicht ist, wobei ein Abstand einhaltbar ist, so dass im Zwischenraum ein Belagträger und eine Ankerscheibe axial beweglich aber radial begrenzt gehalten sind.

Bei einer vorteilhaften Ausgestaltung ist die erste Bremse in einem axial verlängert ausgeführten Lagerschild aufgenommen, an dem die zweite Bremse angebaut ist, insbesondere wobei das Lagerschild als Bremsfläche für einen Belagträger der zweiten Bremse fungiert, wobei der Belagträger von einer mittels Federelementen axial verschiebbaren Ankerscheibe beaufschlagt wird. Von Vorteil ist dabei, dass eine besonders einfache Herstellung ausführbar ist und das Lagerschild auch einen Anteil der Bremswärme der Anbaubremse an die Umgebung abführt.

Bei einer vorteilhaften Ausgestaltung ist zwischen einem Raumbereich, der die erste Bremse umfasst, und einem Raumbereich, der den Stator umfasst, eine Dichtscheibe angeordnet, insbesondere weist die zur Rotorwelle hin eine Abdichtung, wie Labyrinth-Dichtung, auf. Von Vorteil ist dabei, dass kein Abrieb der Reibbeläge des Belagträgers in den motorraumberiech gelangen kann.

Bei einer vorteilhaften Ausgestaltung ist ein Anschlusskasten am axial verlängert ausgeführten Lagerschild befestigt. Von Vorteil ist dabei, dass auch eine Haltefunktion hierfür ausführbar ist vom Lagerschild, wobei auch elektrische Leitungen durch eine Ausnehmung im Lagerschild zum Raumberiech des Stators des Motors führbar sind.

**Erfindungsgemäß** sind die erste und zweite Bremse vorkomplettiert ausgebildet, die Bremsen sind also vor dem Zusammenbauen des gesamten Motors mit Bremsen funktionsüberprüfbar. Von Vorteil ist dabei, dass eine einfaches Handhaben und Herstellen ermöglicht ist.

Die Erfindung wird nun anhand von Abbildungen näher erläutert:
in der Figur 1 ist ein erster erfindungsgemäßer Bremsmotor gezeigt, bei dem der Elektromotor als Asynchronmotor ausgeführt ist.
In der Figur 2 ist ein weiterer erfindungsgemäßer Bremsmotor im Querschnitt gezeigt, bei dem der Elektromotor als Synchronmotor ausgeführt ist.
In der Figur 3 ist eine vorkomplettierte Bremse in Explosionsdarstellung gezeigt.

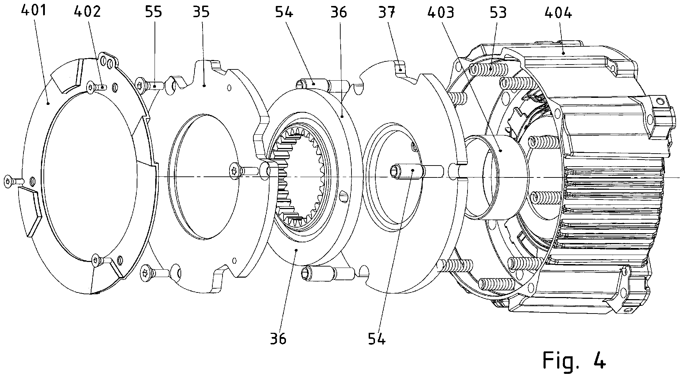

In der Figur 4 ist der Einbau der vorkomplettierten Bremse in ein Gehäuseteil 404 gezeigt, das gemäß Figur 6 an einen Elektromotor anbaubar ist.
In der Figur 5 ist die zu Figur 2 entsprechende Explosionsdarstellung eines Bremsmotors ausgeführt.
In der Figur 6 ist die zu Figur 1 entsprechende Explosionsdarstellung eines Bremsmotors ausgeführt.

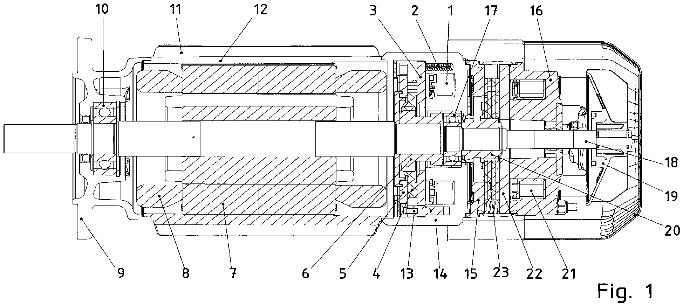

In der Figur 1 weist der Bremsmotor eine Rotorwelle 18 auf, die über ein Lager 10 im Lagerschild 9 gelagert ist. Dieses Lagerschild 9 ist schraubverbunden mit dem Gehäuseteil 12, welches Kühlrippen 11 aufweist. In diesem Gehäuseteil 12 ist das Statorblechpaket kraftschlüssig verbunden, insbesondere auch lösbar verbunden, eingeschrumpft und/oder mit Gussmasse vergossen.

Zugehörige Statorwicklungen sind in Ausnehmungen des Statorblechpakets vorgesehen, wobei in Figur 1 die Umlenkbereiche 8 der Statorwicklungen sichtbar sind.

Am vom Lagerschild 9 abgewandten axialen Endbereich des Gehäuseteils ist eine erste und axial nachfolgend eine zweite Bremse angeordnet, wobei die Bremsen elektromagnetisch betätigbar sind. Außerdem ist am axialen Endbereich des Motors ein Lüfter vorgesehen zur Kühlung der Bremsen und des Motors. Hierzu wird der Kühlluftstrom am Gehäuse des Bremsmotors in im Wesentlichen axialer Richtung entlang gelenkt.

Die erste dieser Bremsen weist ein als Spulenkern ausgebildetes Lagerschild 14 auf, das mit dem Gehäuseteil 12 schraubverbunden ist, wobei eine Dichtung in der Schraubverbindung zwischengeordnet ist. Das Material des Lagerschildes ist magnetisierbar, insbesondere ferromagnetisch. In einer im Wesentlichen ringförmigen Vertiefung des Lagerschilds 14 ist die Bremsspuienwickiung 1 angeordnet.

Eine axial vor der Bremsspulenwicklung, axial verschiebbare und geführte, aber verdrehgesichert angeordnete Ankerscheibe 3 wird bei Bestromung der Bremsspulenwicklung 1 von dieser angezogen und entgegen der von Federelementen 2 erzeugten Federkraft axial auf die Bremsspulenwicklung 1 hin bewegt. Dabei stützen sich die Federelemente 2 auch gegen das Lagerschild 14 ab.

Auf der Rotorwelle 18 ist ein Mitnehmer 6, also ein außenverzahntes Verzahnteil, mittels Passfederverbindung in Umfangsrichtung formschlüssig, also drehfest, verbunden Dabei ist die Außenverzahnung in Achsrichtung der Rotorwelle ausgeführt, so dass ein mit einer innenverzahnung versehener Belagträger 4 in Umfangsrichtung formschlüssig aber in axialer Richtung verschiebbar angeordnet ist. Der Belagträger 4 weist axial an beiden Seiten Reibbeläge auf.

Auf der von der Ankerscheibe abgewandten axialen Seite des Belagträgers 4 ist eine Reibscheibe 5 angeordnet, die mit einem Gehäuseteil des Motors schraubverbindbar ist und somit Reibwärme ableitet an dieses Gehäuseteil.

Zur Schraubverbindung ist eine13 Schraube, die vorzugswiese als Stiftschraube ausgeführt ist, verwendet. Diese Schraube 13 dient zusätzlich auch der Führung der Ankerscheibe 3.

Die integrierte Ausführung des Lagerschildes 14 als Spulenkern ermöglicht auch die direkte Wärmeabfuhr der Bremsspule 1 an die Umgebung. Außerdem ist die beschriebene elektromagnetisch betätigbare Federdruckbremse in radialer Richtung gehäusebildend umgeben vom Lagerschild 14.

Axial vor der Bremse ist der Elektromotor angeordnet, wobei er dicht verbunden ist, also abgedichtet durch eine Dichtung. Axial hinter der Bremse ist eine zweite Bremse angeordnet zusammen mit einem Lüfter und gegebenenfalls mit einem Winkelsensor oder Winkelgeschwindigkeitssensor.

Die erste Bremse ist wegen ihres kompakten, ins Lagerschild 14 als Gehäuseteil integrierten Aufbaus als Einbaubremse bezeichenbar. Hingegen ist die zweite Bremse nach Art einer Anbaubremse ausgeführt.

Die Funktionsweise der Anbaubremse ist wiederum gleichartig zur geschilderten Funktionsweise der Einbaubremse.

Dabei ist die Anbaubremse mittels der Reibscheibe 15 angeschraubt an das Lagerschild 14. Der Spulenkern 16 nimmt wiederum die Bremsspulenwicklung 21 auf, bei deren Bestromung die Ankerscheibe 22 axial gegen die von Federelementen erzeugte Federkraft bewegt wird. Auf dem mit der Rotorwelle 18 drehfest verbundenen Mitnehmer 20 ist wiederum drehfest aber axial verschiebbar ein Belagträger 23 mit beidseitig angeordneten Reibbelägen vorgesehen. Somit wird bei Einfallen der Bremse, also bei Nichtbestromung der Bremsspulenwicklung 21, der Belagträger 23 von der Ankerscheibe 22 auf die Reibscheibe 15 gedrückt.

Am axialen Ende ist ein Lüfter 19 angeordnet. Zum Schutz ist eine mit dem Lagerschild 14 schraubverbundene Lüfterhaube den Lüfter 19 umgebend vorgesehen.

Das Lager 17 ist im Lagerschild 14 aufgenommen. Somit nimmt dieses auch die entsprechenden Kräfte auf. Da auch die Wärme vom Lagerschild 14 aufgenommene Wärme direkt an die Umgebung abführbar ist, außerdem das Lager 17 aufgenommen ist zur Lagerung der Rotorwelle 18 und das Material des Lagerschilds 14 derart ausgewählt und geformt ist, dass die von der Wicklung erzeugten Magnetfelder geführt werden, sind im Lagerschild 14 mehrere technische Funktionen integriert.

Die ans Lagerschild 14 auf der vom Motor abgewandten Seite angebaute Anbaubremse weist ein eigenständiges Gehäuse auf, insbesondere das zusammen mit der Lüfterhaube gebildet ist. Dieses Gehäuse ist mit dem Lagerschild an einer wohldefinierten Schnittstelle schraubverbunden. Dabei ist eine Dichtung vorgesehen und ein Zentriermittel, wie Zentrierbund. Statt der Anbaubremse sind auch andere Anbauten, wie beispielsweise umfassend einen Winkelsensor oder dergleichen, ausführbar.

Auch zum Motor hin weist das Lagerschild 14 eine entsprechende Schnittstelle auf, so dass verschiedene Motoren, insbesondere wahlweise Synchronmotor, Asynchronmotor, LSPM-Motor, Reluktanzmotor oder dergleichen, verbindbar sind an der Schnittstelle.

Bei weiteren erfindungsgemäßen Ausführungsbeispielen sind die Funktionsweise und/oder Wirkprinzipien der beiden Bremsen verschieden ausgeführt. Beispielsweise ist eine erste Bremse mit Gleichstrom und die andere Bremse mit Wechselstrom betrieben.

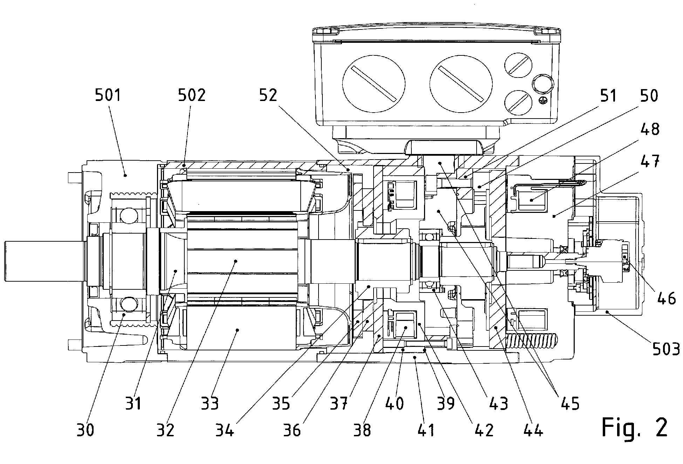

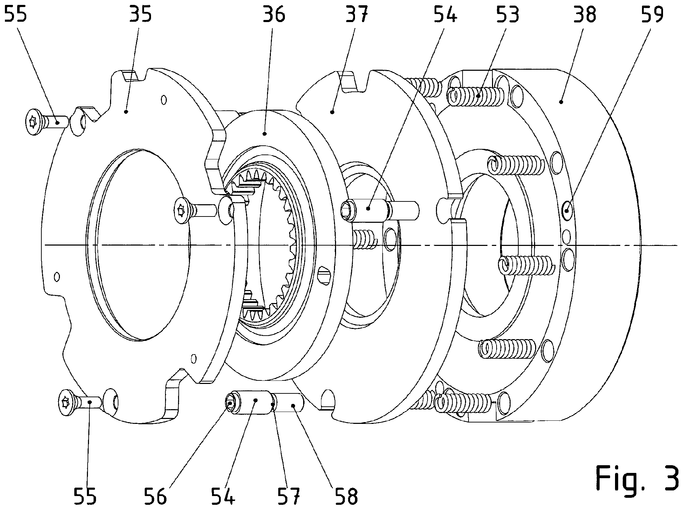

In der Figur 2 ist ein anderer Motor dargestellt, wobei hier die in Figur 3 dargestellte vorkomplettierte erste Bremse in ein Lagerschild 41 eingefügt wird, das die zweite Bremse aufnimmt.

Dabei ist die vorkomplettierte Bremse wiederum aus einem Spulenkörper 38 mit Spulenwicklung zusammengesetzt, an dem sich Druckfedern 53 abstützen und eine Ankerscheibe 37 axial vom Spulenkörper 38 wegdrücken, wenn die Spulenwicklung unbestromt ist. Dabei wird die Ankerscheibe 37 von sich axial erstreckenden Führungsteilen 54 geführt und auf den Belagträger 36 gedrückt, welcher beidseitig Reibbeläge aufweist und auf die Reibscheibe 35 gedrückt wird.

Die Vorkomplettierung bewirkt, dass die in Figur 3 gezeigte Bremse als solche transportierbar ist und eine lagerfähige Einheit bildet, also zusammengehalten ist.

Hierzu weisen die Führungsteile 54 einen ersten axialen Bereich auf, der zur Führung dient, also an der Außenseite zylindrisch und glatt ausgeführt ist. In einem zweiten axialen Bereich ist ein Außengewinde 58 vorgesehen, mit dem das jeweilige Führungsteil 54 in den Spulenkörper 38 eingeschraubt ist, insbesondere in eine jeweilige Gewindebohrung 59 des Spulenkörpers 38.

An der vom axialen Außengewinde-Bereich abgewandten axialen Endbereich des Führungsteils 54 ist ein Innensechskant 56 angeordnet, wodurch das Führungsteil 54 mit einem Sechskant-Werkzeug in eine entsprechend zugeordnete Gewindebohrung 59 des Spulenkörpers 38 einschraubbar ist. Axial tiefer als der Innensechskant 56, also axial sich anschließend an den Bereich des Innensechskants 56 ist eine Innengewindebohrung vorgesehen, in die Schrauben 55 einschraubbar. Dabei wird die Reibscheibe 35 von den Schrauben 55 gegen einen Absatz des Führungsteils gedrückt und somit der Abstand zwischen Reibscheibe 35 und Spulenkern 38 festgelegt.

Auf diese Weise ist die Bremse als Einheit zusammengehalten trotz der axialen Beweglichkeit der Ankerscheibe 37. Außerdem ist der Belagträger 36 gegen ein Herausfallen aus der Bremse gesichert, indem in Umfangsrichtung drei oder mehr Führungsteile 54 vorgesehen sind, die auf einem Durchmesser angeordnet sind, der größer ist als der Außendurchmesser des Belagträgers 36.

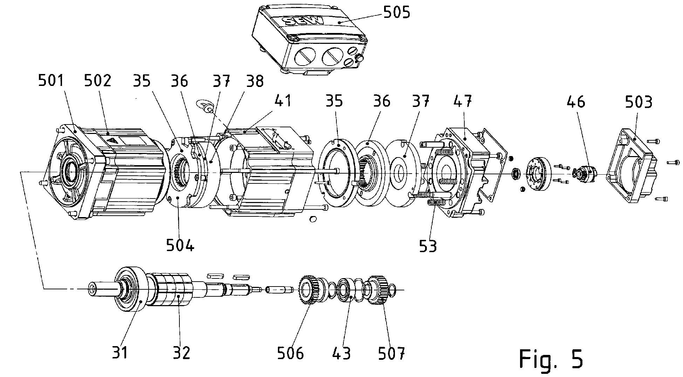

Wie in Figur 2 beziehungsweise in Figur 5 ersichtlich, ist der Anschlusskasten 505 auf das Lagerschild 41 aufschraubbar. Das verlängert ausgeführte Lagerschild 41 nimmt die vorkomplettierte Bremse (36, 37, 38, 504) auf und ist schraubverbunden mit dem Statorgehäuseteil 502 des Synchronmotors. A-seitig ist dieses Statorgehäuseteil abgeschlossen mittels eines Lagerschildes 501 .

Die Rotorwelle 31 ist mit einem Mitnehmer 506 drehfest verbunden, der mit axial verlaufender Außenverzahnung für die Einbaubremse ausgeführt ist, und mit einem Mitnehmer 507, der mit axial verlaufender Außenverzahnung für die Anbaubremse ausgeführt ist.

Die vorkomplettierte Bremse nach Figur 3 wird schraubverbunden mit dem axial verlängert ausgeführten Lagerschild der zweiten Bremse, also in einer Vertiefung des grob gesprochen topfförmig ausgeführten Lagerschildes. Dabei wird die Schraubverbindung mit durchgehenden Verbindungsschrauben 40 ausgeführt.

Der Synchronmotor nach Figur 2 weist wiederum eine Rotorwelle 31 auf, die über ein erstes Lager 30 im Lagerschild 501 gelagert ist. Außerdem sind auf der Rotorwelle Dauermagnete 32 angeordnet, die mit dem auf dem Statorblechpaket 33 vorgesehenen Statorwicklungen wechselwirken.

Des Weiteren ist auf der Rotorwelle 31 wiederum ein Mitnehmer 34 angeordnet, so dass ein axial bewegbarer Reibbelagträger in Umfangsrichtung formschlüssig verbunden ist. Bei Nicht-Bestromung der Spulenwicklung 38 drückt die Ankerscheibe 37 den Belagträger gegen die Reibscheibe 35.

Somit entspricht diese Bremse nach Aufbau und Wirkungsweise der vorkomplettierten Bremse nach Figur 2 und ist nun in das Lagerschild (41, 45) als Einbaubremse eingebaut. Das Lagerschild (41, 45) nimmt aber auch das Lager 43 der Rotorwelle 31 auf.

Des Weiteren weist das Lagerschild (41, 45) einen Zentriersitz 39 auf, an dem die vorkomplettierte Einbaubremse verbindbar ist und somit ausgerichtet wird beim Verbinden.

An das Lagerschild (41, 45) ist eine Anbaubremse angebaut, die kein Lager der Rotorwelle 31 aufnimmt sondern auf der von der Einbaubremse abgewandten Seite 42 des Lagers 43 angeordnet ist.

Die Anbaubremse ist in gleichartiger Weise aufgebaut wie die Einbaubremse, so dass also ein Spulenkern 47 schraubverbunden ist mit dem Lagerschild (41, 45). Im Spulenkern 47 ist eine Spulenwicklung aufgenommen, deren Magnetfeld bei Bestromung der Spulenwicklung 48 die Ankerscheibe anzieht. Bei Nichtbestromung drücken Federelemente die Ankerscheibe wiederum auf einen Belagträger 50, welcher axial beweglich und in Umfangsrichtung formschlüssig mit einem Mitnehmer verbunden ist, der drehfest mit der Rotorwelle verbunden ist. Dabei drückt dann die Ankerscheibe 44 den Belagträger 50 gegen die Reibscheibe 51. Die Ankerscheibe 44 ist wiederum axial geführt die Reibscheibe 51 lösbar verbunden mit dem Spulenkern 47.

Am motorabgewandten Endbereich der Anbaubremse ist ein Winkelsensor 46 angeordnet.

Zwischen Motorbereich und Einbaubremse ist eine Dichtscheibe 52, insbesondere aus Kunststoff, angeordnet. Somit ist verhindert, dass Abrieb des Belagträgers in den Motorbereich gelangt. Die Dichtscheibe 52 ist auch zur Rotorwelle 31 hin abgedichtet ausgeführt, insbesondere mit einer Labyrinthdichtung oder dergleichen. Somit ist der Motorbereich vom Bereich der Einbaubremse genügend abgedichtet, insbesondere um das Eindringen von Abrieb in den Motorbereich zumindest im Wesentlichen zu verhindern.

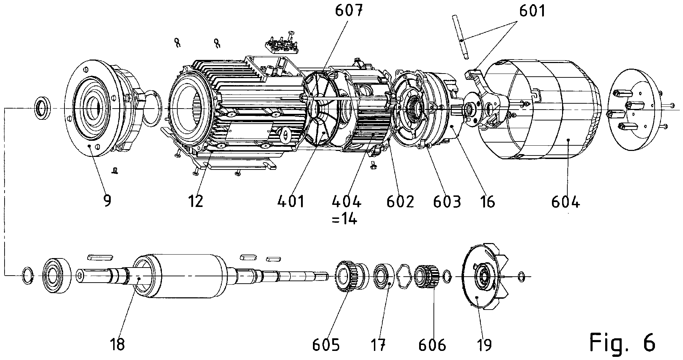

Bei dem erfindungsgemäßen Ausführungsbeispiel nach Figur 6 ist die an den Asynchronmotor angebaute Bremse gezeigt, die als Einbaubremse ausgeführt ist, also den Motor an seiner axialen Stirnseite gehäusebildend abschließt, und mit der Reibscheibe 401 zum Motor hin abgedichtet mit dem Dichtring 607 verbunden wird. Eine zweite Bremse ist als Anbaubremse ausgeführt und abgedichtet mit dem Lagerschild, also Gehäuseteil der Einbaubremse, verbunden mittels des Dichtrings 602. Die Anbaubremse ist mittels der Schrauben 603 an das Lageschild (404, 14) angeschraubt. Am Gehäuseteil 16 der Anbaubremse ist eine Lüfterhaube gehäusebildend vorgesehen, aus der nur der von Hand betätigbare Betätigungshebel der Handlüfteinheit 601 herausragt. Mittels Betätigens dieser Handlüfteinheit 601 ist die Bremse lüftbar, also im stromlosen Fall die Bremskraft abstellbar.

Auf der Rotorwelle 18 ist ein Mitnehmer 605 mit axial verlaufender Außenverzahnung für die Einbaubremse und axial hiervon beabstandet durch das Lager 17 ein Mitnehmer 606 mit axial verlaufender Außenverzahnung für die Anbaubremse vorgesehen.

### Bezugszeichenliste

1 Bremsspulenwicklung
2 Federelemente
3 Ankerscheibe
4 Belagträger
5 Reibscheibe
6 Mitnehmer
7 Statorblechpaket
8 Umlenkbereich der Statorwicklungen
9 Lagerschild
10 Lager
11 Kühlrippen
12 Gehäuseteil
13 Schraube
14, 404 als Spulenkern ausgebildetes Lagerschild
15 Reibscheibe
16 Spulenkern
17 Lager
18 Rotorwelle
19 Lüfter
20 Mitnehmer
21 Bremsspulenwicklung
22 Ankerscheibe
23 Belagträger
30 Lager
31 Rotorwelle
32 Dauermagnete
33 Statorblechpaket
34 Mitnehmer
35 Reibscheibe
36 Belagträger
37 Ankerscheibe
38 Spulenkörper mit Spulenwicklung
39 Zentriersitz
40 Verbindungsschraube
41 Lagerschild, axial verlängert ausgeführt
42 Spulenkern
43 Lager
44 Ankerscheibe
45 Lagerschild
46 Winkelsensor
47 Spulenkern
48 Spulenwicklung
50 Belagträger
51 Reibscheibe
52 Dichtscheibe, insbesondere Kunststoff-Dichtscheibe
53 Druckfedern
54 Führungsteil
55 Schraube zum Anschrauben der Reibscheibe gegen die Stufe des Führungsteils 54
56 Innensechskant
57 Absatz
58 Außengewinde
59 Gewindebohrung
401 Dichtscheibe
402 Schraube
403 Hülse
404 Lagerschild
501 Lagerschild
502 Gehäuseteil des Synchronmotors
503 Gehäuseteil
504 Reibscheibe
505 Anschlusskasten
506 Mitnehmer mit axial verlaufender Außenverzahnung für Einbaubremse
507 Mitnehmer mit axial verlaufender Außenverzahnung für Anbaubremse
601 Handlüfteinheit
602 Dichtring
603 Schraube
604 Lüfterhaube
605 Mitnehmer mit axial verlaufender Außenverzahnung für Einbaubremse
606 Mitnehmer mit axial verlaufender Außenverzahnung für Anbaubremse
607 Dichtring

## Patentansprüche

1. Elektromotor mit einer ersten und einer zweiten Bremse,
wobei die erste Bremse im Gehäuse des Motors angeordnet ist,
wobei das Gehäuse die Statorwicklungen des Motors gehäusebildend umgibt und aus Gehäuseteilen (12, 502, 503) zusammengesetzt ist, insbesondere mittels jeweiliger abgedichteter Schraubverbindungen zwischen den Gehäuseteilen (12, 502, 503),
wobei die zweite Bremse am Motor angebaut ist, insbesondere also am Gehäuse des Motors angebaut ist,
**wobei beide Bremsen als elektromagnetisch betätigbare Federdruckbremse ausgeführt sind, wobei am Spulenkörper des Elektromagneten Federelemente (2) abgestützt sind, die bei Nichtbestromung des Elektromagneten eine Ankerscheibe (3, 22, 37, 44) auf einen Belagträger (4, 23, 36, 50) drücken, der somit auf eine Reibscheibe (5, 15, 35, 51, 504) gedrückt wird, wobei die Ankerscheibe (3, 22, 37, 44) drehfest zur Reibscheibe (5, 15, 35, 51, 504) und zum Elektromagneten angeordnet ist und axial verschiebbar angeordnet ist, wobei der Belagträger (4, 23, 36, 50) mit der Rotorwelle (18, 31) des Elektromotors drehfest und axial verschiebbar verbunden ist.**
**dadurch gekennzeichnet, dass**
**die erste und zweite Bremse vorkomplettiert ausgebildet sind, die Bremsen also** vor **dem Zusammenbauen des gesamten Motors mit Bremsen funktionsüberprüfbar sind, indem eine Reibscheibe (5, 15, 35, 51, 504) mittels eines Führungsteils axial beabstandet zu einem Spulenkern (16, 42, 47) der Bremse und festgelegt ist,**
**wobei das Führungsteil zur axialen Führung der Ankerscheibe (3, 22, 37, 44) der Bremse vorgesehen ist,**
**wobei die Ankerscheibe (3, 22, 37, 44) in Umfangsrichtung formschlüssig begrenzt und gehalten ist vom Führungsteil,**
**wobei das Führungsteil einen ersten axialen Abschnitt aufweist zur Führung der Ankerscheibe (3, 22, 37, 44) und einen zweiten axialen Abschnitt** (58) **aufweist, der ein Außengewinde zum Einschrauben in eine Gewindebohrung des Spulenkerns (16, 42, 47) aufweist.**

2. Elektromotor nach Anspruch 1,
**dadurch gekennzeichnet, dass**
die erste Bremse in einem Gehäuseteil (12, 502, 503), insbesondere Lagerschild (9, 41, 45, 404, 501), aufgenommen ist, insbesondere in einer im Wesentlichen topfförmigen Vertiefung aufgenommen ist und schraubverbunden ist.

3. Elektromotor nach einem der vorhergehenden Ansprüche,
**dadurch gekennzeichnet, dass**
die erste Bremse in einem Gehäuseteil (12, 502, 503), insbesondere Lagerschild (9, 41, 45, 404, 501), aufgenommen ist, welches als Spulenkern (16, 42, 47) der Spulenwicklung des Elektromagneten der Bremse fungiert.

4. Elektromotor nach einem der vorhergehenden Ansprüche,
**dadurch gekennzeichnet, dass**
das Gehäuseteil (12, 502, 503) ein Lager (10, 17, 30, 43) der Rotorwelle (18, 31) des Motors aufnimmt.

5. Elektromotor nach einem der vorhergehenden Ansprüche,
**dadurch gekennzeichnet, dass**
**das Gehäuseteil (12, 502, 503)** in einer im Wesentlichen topfförmigen Vertiefung aufgenommen und schraubverbunden ist.

6. **Elektromotor nach einem der vorhergehenden Ansprüche,**
**dadurch gekennzeichnet, dass**
**an einem axialen Endbereich des Führungsteils ein Innensechskant vorgesehen ist, insbesondere so dass das Führungsteil mittels eines Sechskant-Werkzeugs in eine Gewindebohrung des Spulenkerns (16, 42, 47) einschraubbar ist.**

7. **Elektromotor nach einem der vorhergehenden Ansprüche,**
**dadurch gekennzeichnet, dass**
**der Spulenkern (16, 42, 47) der ersten Bremse ein Lager (10, 17, 30, 43) der Rotorwelle (18, 31) aufnimmt.**

8. **Elektromotor nach einem der vorhergehenden Ansprüche,**
**dadurch gekennzeichnet, dass**
**das Führungsteil eine Ausnehmung mit Innengewinde aufweist, so dass eine Reibscheibe (5, 15, 35, 51, 504) der Bremse mittels einer Schraube an das Führungsteil schraubverbindbar ist, insbesondere gegen einen Absatz am Außenumfang des Führungsteils festlegbar ist.**

9. Elektromotor nach einem der vorhergehenden Ansprüche,
**dadurch gekennzeichnet, dass**
die erste Bremse in einem axial verlängert ausgeführten Lagerschild (9, 41, 45, 404, 501) aufgenommen ist, an dem die zweite Bremse angebaut ist, insbesondere wobei das Lagerschild (9, 41, 45, 404, 501) als Bremsfläche für einen Belagträger (4, 23, 36, 50) der zweiten Bremse fungiert, wobei der Belagträger (4, 23, 36, 50) von einer mittels Federelementen (2) axial verschiebbaren Ankerscheibe (3, 22, 37, 44) beaufschlagt wird.

10. Elektromotor nach einem der vorhergehenden Ansprüche,
**dadurch gekennzeichnet, dass**
zwischen einem Raumbereich, der die erste Bremse umfasst, und einem Raumbereich, der den Stator umfasst, eine Dichtscheibe angeordnet ist, insbesondere weist die zur Rotorwelle (18, 31) hin eine Abdichtung, wie Labyrinth-Dichtung, auf.

11. Elektromotor nach einem der vorhergehenden Ansprüche,
**dadurch gekennzeichnet, dass**
ein Anschlusskasten am axial verlängert ausgeführten Lagerschild (9, 41, 45, 404, 501) befestigt ist.

## Claims

1. Electric motor having a first brake and a second brake,
wherein the first brake is arranged in the housing of the motor,
wherein the housing encloses the stator windings of the motor so as to form a housing and is assembled from housing parts (12, 502, 503), in particular by means of respective sealed screw connections between the housing parts (12, 502, 503),
wherein the second brake is attached to the motor, in particular therefore is attached to the housing of the motor,
wherein both brakes are embodied as electromagnetically actuable spring-loaded brakes, wherein spring elements (2) are supported against the coil body of the electromagnet, which spring elements, when no power is being supplied to the electromagnet, press an armature disc (3, 22, 37, 44) against a lining carrier (4, 23, 36, 50) which is thus pressed against a friction disc (5, 15, 35, 51, 504), wherein the armature disc (3, 22, 37, 44) is arranged in a rotationally fixed manner relative to the friction disc (5, 15, 35, 51, 504) and to the electromagnet and is arranged in an axially displaceable manner, wherein the lining carrier (4, 23, 36, 50) is connected to the rotor shaft (18, 31) of the electric motor in a rotationally fixed and axially displaceable manner,
**characterized in that**
the first and second brakes are in pre-assembled form, and the brakes can therefore be checked for proper functioning prior to assembling the entire motor with brakes, whereby a friction disc (5, 15, 35, 51, 504) is arranged at an axial spacing from a coil core (16, 42, 47) of the brake by means of a guide part and is fixed in position,
wherein the guide part is provided for axially guiding the armature disc (3, 22, 37, 44) of the brake,
wherein the armature disc (3, 22, 37, 44) is delimited and held by the guide part with a form fit in the circumferential direction,
wherein the guide part has a first axial section for guiding the armature disc (3, 22, 37, 44) and a second axial section (58) which has an external thread for screwing into a threaded bore of the coil core (16, 42, 47).

2. Electric motor according to claim 1,
**characterized in that**
the first brake is accommodated in a housing part (12, 502, 503), in particular an end shield (9, 41, 45, 404, 501), in particular is accommodated and screw-connected in a substantially pot-shaped depression.

3. Electric motor according to one of the preceding claims,
**characterized in that**
the first brake is accommodated in a housing part (12, 502, 503), in particular an end shield (9, 41, 45, 404, 501), which acts as a coil core (16, 42, 47) of the coil winding of the electromagnet of the brake.

4. Electric motor according to one of the preceding claims,
**characterized in that**
the housing part (12, 502, 503) accommodates a bearing (10, 17, 30, 43) of the rotor shaft (18, 31) of the motor.

5. Electric motor according to one of the preceding claims,
**characterized in that**
the housing part (12, 502, 503) is accommodated and screw-connected in a substantially pot-shaped depression.

6. Electric motor according to one of the preceding claims,
**characterized in that**
a hexagon socket is provided on an axial end region of the guide part, in particular such that the guide part can be screwed into a threaded bore of the coil core (16, 42, 47) by means of a hexagon tool.

7. Electric motor according to one of the preceding claims,
**characterized in that**
the coil core (16, 42, 47) of the first brake accommodates a bearing (10, 17, 30, 43) of the rotor shaft (18, 31).

8. Electric motor according to one of the preceding claims,
**characterized in that**
the guide part has a recess with an internal thread such that a friction disc (5, 15, 35, 51, 504) of the brake can be screw-connected to the guide part by means of a screw, in particular can be fixed in position against a shoulder on the outer circumference of the guide part.

9. Electric motor according to one of the preceding claims,
**characterized in that**
the first brake is accommodated in an axially extended end shield (9, 41, 45, 404, 501), to which the second brake is attached, in particular wherein the end shield (9, 41, 45, 404, 501) acts as a braking surface for a lining carrier (4, 23, 36, 50) of the second brake, wherein load is applied to the lining carrier (4, 23, 36, 50) by an armature disc (3, 22, 37, 44) which is axially displaceable by means of spring elements (2).

10. Electric motor according to one of the preceding claims,
**characterized in that**
a sealing disc is arranged between a spatial region which comprises the first brake and a spatial region which comprises the stator, said sealing disc having in particular a sealing means, such as a labyrinth seal, towards the rotor shaft (18, 31) .

11. Electric motor according to one of the preceding claims,
**characterized in that**
a terminal box is fastened to the axially extended end shield (9, 41, 45, 404, 501).

## Revendications

1. Moteur électrique comportant des premier et second freins,
le premier frein étant logé dans le carter dudit moteur,
lequel carter entoure les enroulements statoriques dudit moteur, avec formation d'une enceinte, et est composé de parties (12, 502, 503), notamment au moyen de liaisons vissées respectives dont l'étanchéité est assurée, entre lesdites parties (12, 502, 503) du carter,
le second frein étant rapporté sur le moteur, c'est-à-dire notamment rapporté sur le carter dudit moteur,
les deux freins étant réalisés sous la forme d'un frein à pression de ressorts, actionnable électromagnétiquement, le corps de la bobine de l'électro-aimant procurant un appui à des éléments élastiques (2) qui, lorsque ledit électro-aimant n'est pas alimenté en courant, pressent un disque d'induit (3, 22, 37, 44) contre un support de garniture (4, 23, 36, 50), lequel est par conséquent pressé contre un disque de friction (5, 15, 35, 51, 504), ledit disque d'induit (3, 22, 37, 44) étant agencé avec verrouillage rotatif par rapport audit disque de friction (5, 15, 35, 51, 504) et par rapport audit électro-aimant, et étant apte à coulisser axialement, ledit support de garniture (4, 23, 36, 50) étant relié à l'arbre rotorique (18, 31) du moteur électrique avec verrouillage rotatif et faculté de coulissement axial,
**caractérisé par le fait que**
les premier et second freins sont de réalisation préfinalisée, c'est-à-dire que le fonctionnement desdits freins peut être contrôlé avant l'assemblage de l'intégralité du moteur équipé de freins, un disque de friction (5, 15, 35, 51, 504) étant alors placé à distance axiale d'un noyau (16, 42, 47) de la bobine du frein, au moyen d'une pièce de guidage, puis bloqué à demeure,
laquelle pièce de guidage est prévue pour le guidage axial du disque d'induit (3, 22, 37, 44) dudit frein,
ledit disque d'induit (3, 22, 37, 44) étant délimité par complémentarité de formes dans le sens périphérique, et retenu par ladite pièce de guidage,
sachant que ladite pièce de guidage comprend un premier segment axial dévolu au guidage dudit disque d'induit (3, 22, 37, 44), et un second segment axial (58) muni d'un filetage extérieur conçu pour être vissé dans un perçage taraudé du noyau (16, 42, 47) de la bobine.

2. Moteur électrique selon la revendication 1,
**caractérisé par le fait que**
le premier frein est logé dans une partie (12, 502, 503) du carter, en particulier un bouclier de palier (9, 41, 45, 404, 501), et est notamment logé et relié par vissage dans un renfoncement revêtant, pour l'essentiel, la forme d'une coupelle.

3. Moteur électrique selon l'une des revendications précédentes,
**caractérisé par le fait que**
le premier frein est logé dans une partie (12, 502, 503) du carter, en particulier un bouclier de palier (9, 41, 45, 404, 501) remplissant la fonction du noyau (16, 42, 47) de l'enroulement de la bobine de l'électro-aimant dudit frein.

4. Moteur électrique selon l'une des revendications précédentes,
**caractérisé par le fait que**
la partie (12, 502, 503) du carter reçoit un palier (10, 17, 30, 43) de l'arbre rotorique (18, 31) dudit moteur.

5. Moteur électrique selon l'une des revendications précédentes,
**caractérisé par le fait que**
la partie (12, 502, 503) du carter est logée, et reliée par vissage, dans un renfoncement revêtant pour l'essentiel la forme d'une coupelle.

6. Moteur électrique selon l'une des revendications précédentes,
**caractérisé par le fait**
**qu'**une configuration à six pans creux est prévue dans une région extrême axiale de la pièce de guidage, notamment de façon telle que ladite pièce de guidage puisse être vissée, au moyen d'un outil hexagonal, dans un perçage taraudé du noyau (16, 42, 47) de la bobine.

7. Moteur électrique selon l'une des revendications précédentes,
**caractérisé par le fait que**
le noyau (16, 42, 47) de la bobine du premier frein reçoit un palier (10, 17, 30, 43) de l'arbre rotorique (18, 31).

8. Moteur électrique selon l'une des revendications précédentes,
**caractérisé par le fait que**
la pièce de guidage est pourvue d'un évidement à filetage intérieur, de telle sorte qu'un disque de friction (5, 15, 35, 51, 504) du frein puisse être relié par vissage à ladite pièce de guidage, au moyen d'une vis, et puisse en particulier être bloqué à demeure contre un décrochement façonné sur le pourtour extérieur de ladite pièce de guidage.

9. Moteur électrique selon l'une des revendications précédentes,
**caractérisé par le fait que**
le premier frein est logé dans un bouclier de palier (9, 41, 45, 404, 501) réalisé avec prolongement axial et sur lequel le second frein est rapporté, sachant notamment que ledit bouclier de palier (9, 41, 45, 404, 501) remplit la fonction d'une surface de freinage dédiée à un support de garniture (4, 23, 36, 50) dudit second frein, ledit support de garniture (4, 23, 36, 50) étant sollicité par un disque d'induit (3, 22, 37, 44) apte à coulisser, dans le sens axial, au moyen d'éléments élastiques (2).

10. Moteur électrique selon l'une des revendications précédentes,
**caractérisé par le fait**
**qu'**un disque d'étanchement est interposé entre une zone spatiale incluant le premier frein et une zone spatiale incluant le stator, lequel disque est notamment muni, en direction de l'arbre rotorique (18, 31), d'une garniture d'étanchement telle qu'un joint d'étanchement à labyrinthe.

11. Moteur électrique selon l'une des revendications précédentes,
**caractérisé par le fait**
**qu'**un boîtier de connexion est fixé au bouclier de palier (9, 41, 45, 404, 501) réalisé avec prolongement axial.
